# EUROPÄISCHE PATENTSCHRIFT

(11) **EP 0 639 533 B1**
(45) Veröffentlichungstag und Bekanntmachung des Hinweises auf die Patenterteilung: **04.02.1998**
(21) Anmeldenummer: 94110556.1
(22) Anmeldetag: 07.07.1994
(51) Int. Cl.: C02F 1/50

(54) **Verfahren zur Dosierung strömender Gewässer mit Acrolein und Vorrichtung zu seiner Durchführung**
Method of dosing flowing waters with acrolein and apparatus therefor
Procédé de dosage des eaux courantes avec de l'acroléine et dispositif pour sa mise en oeuvre

(30) Priorität: 07.08.1993 DE 4326575
(43) Veröffentlichungstag der Anmeldung: 22.02.1995
(73) Patentinhaber: Degussa Aktiengesellschaft, 60311 Frankfurt (DE)
(72) Erfinder: Werle, Peter, Dr., D-63571 Gelnhausen (DE); Geissler, Bernd, D-64823 Gross-Umstadt (DE); Trageser, Martin, D-63571 Gelnhausen (DE)

(56) Entgegenhaltungen:
- EP-A- 0 087 509
- WO-A-84/03287
- DE-A- 1 901 758
- DE-A- 4 038 471
- GB-A- 2 023 123
- US-A- 3 380 462
- US-A- 3 690 857
- US-A- 5 022 428

## Beschreibung

Die Erfindung richtet sich auf ein Verfahren und eine Vorrichtung zur Dotierung strömender Gewässer, insbesondere Wasser in Bewässerungskanälen, mit Acrolein als Biozid, um eine Veralgung und Verkrautung dieser Gewässer zu vermeiden. Im erfindungsgemäßen Verfahren wird ein Acroleinacetal als Biozid-Precursor eingesetzt und in der erfindungsgemäßen Vorrichtung deacetalisiert; zum Betreiben der Vorrichtung ist keine elektrische Energie erforderlich.

In klimatisch warmen Zonen mit ausgedehnten landwirtschaftlich genutzten Feldern und Plantagen wird ein großes Netz an Bewässerungskanälen unterhalten. In diesen Kanälen kommt es leicht zur Veralgung und Verkrautung durch Wasserpflanzen. Die Pflanzen behindern die Fließgeschwindigkeit in den Kanälen und gefährden die störungsfreie Funktion der zum Betrieb notwendigen Pumpstationen. Aus diesem Grund ist es üblich, das Wasser in einem derartigen Bewässerungssystem mit einem Biozid zu behandeln.

Zur Dotierung derartiger strömender Gewässer können unterschiedliche Biozide eingesetzt werden. In der Praxis hat sich als Biozid Acrolein besonders bewährt.

Gegenüber anderen Bioziden bietet Acrolein neben der bislang unübertroffenen Wirksamkeit auch den Vorteil, daß es in Wasser nach relativ kurzer Zeit abgebaut ist. Damit ist Acrolein bis zur Bewässerung der Felder nicht mehr als Biozid wirksam, sondern zu pflanzenphysiologisch unbedenklichen Folgeprodukten abgebaut.

Zur Dotierung des Wassers wird bisher an einen mit Acrolein gefüllten Vorratsbehälter mittels eines Druckgases aus einer Druckgasflasche ein Überdruck angelegt und das Acrolein über ein Steigrohr aus dem Vorratsbehälter direkt in den Bewässerungskanal geleitet. Aufgrund der physikalischen und chemischen Eigenschaften des Acroleins ist die Handhabung jedoch risikoreich: Acrolein ist giftig und stark inhalationstoxisch sowie stechend und tränenreizend; das Produkt ist leicht entzündlich (Flammpunkt -29 °C, Siedepunkt 53 °C), was die Handhabung in klimatisch warmen Zonen problematisch werden läßt; durch Kontamination des Acroleins mit Verunreinigungen besteht ferner explosionsartige Polymerisationsgefahr.

In Anbetracht der dargestellten Risiken, welche sich sowohl beim Transport als auch bei der Verwendung von Acrolein ergeben, besteht ein Bedarf, die Dotierung mit einem vergleichbar wirksamen Biozid vorzunehmen, dessen Handhabung aber wesentlich weniger risikoreich ist.

Aus der US-PS 4,851,583 ist bekannt, Acroleinacetale, darunter auch cyclische Acroleinacetale, unter Rückbildung von Acrolein zu hydrolysieren. Als Katalysator werden stark saure Ionenaustauscher eingesetzt. Zur Dotierung strömender Gewässer ist dieses Verfahren aber nicht geeignet, weil es rasch zur Verschmutzung beziehungsweise Inaktivierung des Ionenaustauschers käme. Die meisten Acroleinacetale weisen ferner nur eine sehr begrenzte Löslichkeit in Wasser auf, und zudem ist die Lösegeschwindigkeit niedrig: Beispielsweise werden zur Herstellung einer unter Praxisbedingungen nahezu gesättigten (etwa 8 Gew.-%) Lösung von 2-Vinyl-1,3-Dioxolan (VDL) in Wasser bei intensiver Durchmischung etwa 10 Minuten benötigt; bei einer Wasserfracht von 30.000 m³/h und starkem Algenwachstum wären zwecks ausreichender Dotierung 300 l VDL/h mit 3750 l Wasser/h zu homogenisieren und dann zu deacetalisieren. Die genannten Faktoren erschwerten bisher die Verwendung von Acroleinacetalen zur Freisetzung ausreichend großer Mengen an Acrolein, wie sie zur Behandlung von Bewässerungskanälen, insbesondere solchen mit hoher Algen- und Wasserpflanzenbelastung notwendig sind, weil elektrische Energie zwecks Intensivmischung unter Praxisbedingungen nicht zur Verfügung steht.

Ein anderer Weg zur Dotierung von Wasser wird in der DE-OS 40 38 471 beschrieben: Hiernach wird Acrolein durch Deacetalisierung von Acroleinacetalen in wäßriger Phase in Gegenwart eines stark sauren Katalysators gebildet; eingesetzt wird hierbei ein Acroleindi-n-alkylacetal, deren Alkylgruppen 3 bis 5 C-Atome enthalten oder ein cyclisches Acroleinacetal, deren Alkoholkomponente 2 bis 6 C-Atome und 2 bis 6, vorzugsweise 2 bis 4, OH-Gruppen aufweist; als Deacetalisierungskatalysator wird ein stark saurer Ionenaustauscher oder eine Mineralsäure eingesetzt. Das in der DE-OS 40 38 471 beschriebene Verfahren zum Dotieren wäßriger Lösungen basiert darauf, daß das während der Deacetalisierung in einem Reaktionsgefäß gebildete Acrolein ständig aus der wäßrigen Phase entfernt und in die zu dotierende wäßrige Lösung überführt wird; die genannte Überführung erfolgt entweder mittels eines durch das Reaktionsgefäß geführten Gasstromes, der anschließend in die zu dotierende wäßrige Lösung geleitet wird oder unter Verwendung einer Flüssigkeitsstrahlpumpe, deren Treibmittel die zu dotierende wäßrige Lösung ist. Dieses Verfahren eignet sich zwar sehr gut zum Dotieren von beispielsweise Kühlwasserkreisläufen in Industrieanlagen, es läßt sich in der Praxis aber nicht verwenden zur Dotierung strömender Gewässer, wie des Wassers in Bewässerungskanälen, weil am Ort der Dotierung im allgemeinen keine elektrische Energie zur Verfügung steht, welche zum Betreiben der Pumpen notwendig wäre. Die Dotierung strömender Gewässer mit einem Biozid muß auf "freiem Feld" durchführbar sein, wobei zur Bedienung einer entsprechenden Vorrichtung weder elektrische Energie noch chemisch geschultes Fachpersonal zur Verfügung stehen.

Die Aufgabe der vorliegenden Erfindung besteht somit darin, ein Verfahren zur Behandlung strömender Gewässer mit Acrolein aufzuzeigen, das die Nachteile der direkten Verwendung von Acrolein vermeidet und einfacher durchführbar ist als vorbekannte Verfahren unter Verwendung eines Acroleinacetals als Biozid-Precursor. Das Verfahren sollte leicht handhabbar und nicht auf elektrische Energiezufuhr zum Betreiben von Pumpen, Rühr- und Heizvorrichtungen angewiesen sein. Zusätzlich sollte die Vorrichtung zur Dotierung möglichst einfach, robust und transportabel sein und von wenig geschultem Personal bedient werden können.

Das erfindungsgemäße Verfahren zur Dotierung strömener Gewässer mit Acrolein, wobei Acrolein außerhalb des Gewässers durch Deacetalisierung eines Acetals von Acrolein mit einem Alkohol mit 1 bis 4 C-Atomen und 1 bis 3 Hydroxylgruppen in wäßriger Phase in Gegenwart einer Mineralsäure gebildet wird, ist dadurch gekennzeichnet, daß man
eine 25 bis 95 gew.-%ige Lösung des Acroleinacetals in einem Lösungsmittel und
eine 3 bis 30 gew.-%ige wäßrige Mineralsäurelösung
aus druckfesten Vorratsbehältern durch Anlegen eines Drucks aus einer Druckgasflasche, insbesondere einer N₂-Stahlflasche,
in eine Mischkammer drückt,
wobei das Mischungsverhältnis mittels Dosiervorrichtungen in den Zufuhrleitungen so eingestellt wird, daß das Reaktionsgemisch pro Mol Acroleinacetal mindestens 1 Mol Wasser und zwischen 0,01 und 0,1 Mol Mineralsäure enthält,
das in der Mischzone erhaltene Reaktionsgemisch zunächst durch einen rohrförmigen und anschließend durch einen behälterförmigen Teil eines Deacetalisierungsreaktors leitet,
wobei die mittlere Verweilzeit im rohrförmigen Reaktor mindestens 10 Sekunden und im behälterförmigen Reaktor mindestens 2 Minuten beträgt,
und das aus dem behälterförmigen Reaktor austretende Reaktionsgemisch in das zu dotierende strömende Gewässer einleitet.

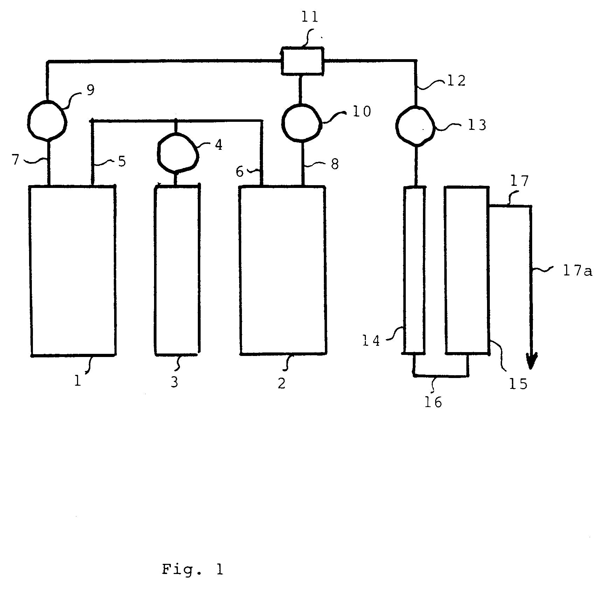

Die erfindungsgemäße Vorrichtung - Figur 1 zeigt eine bevorzugte Ausführungsform - zur Durchführung des Verfahrens umfaßt einen Deacetalisierungsreaktor (14) und (15) und je einen Vorratsbehälter für eine ein Acroleinacetal enthaltende Lösung (1) und eine wäßrige Mineralsäurelösung (2) und ist dadurch gekennzeichnet, daß
die Vorratsbehälter (1) und (2) druckfest ausgebildet und zwecks Druckaufbau mit einer Druckgasflasche (3) mit Druckregelvorrichtung (4) verbunden sind,
die Produktleitungen (7) und (8), welche jeweils eine Dosiervorrichtung (9) bzw. (10) aufweisen,
aus den Vorratsbehältern in eine Mischkammer (11) führen, wobei sich die Mischkammer vor oder im Eingangsbereich des Deacetalisierungsreaktors befindet,
der Deacetalisierungsreaktor einen rohrförmigen ersten (14) und einen behälterförmigen zweiten (15) Reaktorteil umfaßt und
der Ausgang des Deacetalisierungreaktors (17) mit einer unter die Oberfläche des zu dotierenden Gewässers führenden Leitung (17a) verbunden ist.

Durch das erfindungsgemäße Verfahren und die erfindungsgemäße Vorrichtung zur Durchführung desselben werden die zuvor aufgezeigten Probleme der vorbekannten Verfahren behoben. Mit geringem technischen Aufwand lassen sich auch große und stark belastete strömende Gewässer, wie Bewässerungskanäle, wirksam behandeln.

Bei den erfindungsgemäß zu verwendenden Acroleinacetalen handelt es sich um solche mit (i) einwertigen (C₁- bis C₄-)-Alkoholen, wie Methanol, Ethanol, Propanolen und Butanolen, (ii) zweiwertigen (C₂- bis C₄-)-Alkoholen, wie Ethylenglykol, 1,2- oder 1,3-Propylenglykol und Butandiolen und (iii) dreiwertigen Alkoholen, wie Glycerin und Trihydroxybutane. Acetale mit einer Alkoholkomponenten vom Typ (i) und (ii) sind wenig wasserlöslich, solche mit einem Alkohol vom Typ (iii) sind besser wasserlöslich. Bevorzugt werden Acroleinacetale mit einer 2-Vinyl-1,3-dioxolan- oder 2-Vinyl-1,3-Dioxanstruktur verwendet, besonders bevorzugt das 2-Vinyl-1,3-dioxolan (VDL), das leicht aus Acrolein und Ethylenglykol erhältlich ist.

Das zu verwendende Acroleinacetal wird in Form einer Lösung eingesetzt. Menge und Auswahl des Lösungsmittels werden derart gewählt, daß es nach Zugabe einer wäßrigen Mineralsäure und Transport des Reaktionsgemischs durch den rohrförmigen Teil des Reaktors der erfindungsgemäßen Vorrichtung nicht mehr zu einer Entmischung kommt und die Deacetalisierung im behälterförmigen Reaktor vervollständigt werden kann.

Als Lösungsmittel für Acroleinacetale mit begrenzter Wasserlöslichkeit kommen vollständig wasserlösliche organische Lösungsmittel, wie niedere Alkohole, niedere Ketone und dipolare Lösungsmittel infrage; Lösungsmittelgemische werden eingeschlossen. Besonders bevorzugte organische Lösungsmittel sind einwertige C₁- bis C₄-Alkohole, insbesondere Isopropanol. Überraschenderweise ist Ethylenglykol als Lösungsmittel für VDL im erfindungsgemäßen Verfahren wenig geeignet. Für die besser wasserlöslichen Acroleinacetale kommen als Lösungsmittel Wasser und/oder die vorgenannten Lösungsmittel infrage. Bei Verwendung organischer Lösungsmittel wird die Lösungsmittelmenge aus Kostengründen minimiert. Zweckmäßig ist es, wenn die Lösung mindestens 50 Gew.-%, vorzugsweise mindestens 80 Gew.-%, des Acroleinacetals enthält. Die Obergrenze des Acetalgehalts richtet sich außer nach der Wasserlöslichkeit des Acetals nach der gewünschten Verweilzeit des Reaktionsgemischs im rohrförmigen Reaktorteil; vorzugsweise ist der Acetalgehalt möglichst hoch und kann in günstigen Fällen 90 bis 95 Gew.-% erreichen. Im Falle des 2-Vinyl-1,3-dioxolan enthält die Lösung vorzugsweise Isopropanol als Lösungsmittel und einen Acetalgehalt von 80 bis 90 Gew.-%

Als Mineralsäure wird Schwefelsäure gegenüber Salzsäure, Salpetersäure und Phosphorsäure bevorzugt. Die Säurekonzentration in der einzusetzenden wäßrigen Lösung beträgt 3 bis 30 Gew.-%, vorzugsweise 5 bis 20 Gew.-%. Im allgemeinen wird mit der wäßrigen Säure gleichzeitig die für die Deacetalisierung erforderliche Menge Wasser, nämlich mindestens 1 Mol, vorzugsweise mindestens 2 Mol Wasser pro Mol Acetal in das Reaktionsgemisch eingebracht. Die Einsatzmenge an Mineralsäure pro Mol Acroleinacetal liegt im allgemeinen im Bereich zwischen 1 und 30 Mol-%, vorzugsweise zwischen 2 und 10 und insbesondere zwischen 3 bis 7 Mol-%.

Für den Erhalt einer homogenen Reaktionsmischung, welche für eine ausreichend rasche Deacetalisierung nötig ist, hat sich die Verwendung eines Deacetalisierungsreaktors mit einem ersten rohrförmigen und einen zweiten behälterförmigen Teil als wesentlich erwiesen. Das aus einem Acroleinacetal, Wasser, Lösungsmittel und Mineralsäure bestehende Reaktionsgemisch ist, sofern nicht sehr viel Lösungsmittel anwesend ist, unmittelbar nach dem Zusammenbringen der Acetal- und der Mineralsäurelösung im allgemeinen nicht homogen, sondern zweiphasig. Im rohrförmigen Teil des Reaktors findet eine ausreichende Durchmischung aller Komponenten unter teilweiser Umsetzung statt, ohne daß es, wie dies in behälterförmigen Reaktoren ohne Rührvorrichtung der Fall wäre, zur Entmischung kommt. Nach Passage des Reaktionsgemischs durch den rohrförmigen Reaktorteil ist das Gemisch weitgehend homogen.

Die Reaktionszeit im rohrförmigen Reaktor wird auf mindestens 10 bis etwa 60 Sekunden und vorzugsweise 20 bis 40 Sekunden eingestellt. Durch Verwendung eines wendelförmigen Rohrreaktors als rohrförmiger Reaktorteil, senkrechter Anordnung der Wendel und einer Durchflußrichtung von oben nach unten wird einer Entmischung vorteilhaft engegengewirkt. Im Falle sich leicht entmischender Reaktionsgemische ist ein längerer Rohrreaktor und/oder eine längere Reaktionszeit im ersten Reaktorteil erforderlich. Die Reaktorzeit im behälterförmigen zweiten Reaktorteil beträgt mindestens 2 Minuten; meist liegt die Reaktionszeit zwischen 3 und 30 Minuten, insbesondere zwischen 5 und 20 Minuten.

Das Einstellen der Verweilzeit im ersten und zweiten Reaktorteil ist wesentlich für eine gute Acroleinausbeute - die Verweilzeit ist, wie bereits erwähnt, abhängig von der Löslichkeit und Lösegeschwindigkeit des Acroleinacetals, den Molverhältnissen Acetal zu Wasser und Acetal zu Mineralsäure. Der Fachmann wird durch Vorversuche die Betriebsbedingungen optimieren. Eine zu lange Reaktionszeit im behälterförmigen Reaktor ist zu vermeiden, weil es andernfalls zu einer unerwünschten Acroleinpolymerisation kommen kann.

Das den Deacetalisierungsreaktor verlassende Reaktionsgemisch wird direkt in das zu dotierende Gewässer eingeleitet. Bei der Einleitung erfolgt die rasche und vollständige Hyrolyse eventuell noch nicht oder nicht vollständig umgesetzten Acroleinacetals, so daß Acroleinausbeuten von über 99 %, bezogen auf das eingesetzte Acetal, resultieren.

Zur Einstellung der Verweilzeit des Reaktionsgemisches im rohrförmigen Reaktor ist es zweckmäßig, das Ende des Rohres mit einer Düse, etwa einer Lochblende, mit gewünschtem Durchmesser - üblicherweise zwischen 0,5 und 5 mm -, auszustatten und den Druck im Reaktor und damit die Durchflußgeschwindigkeit und Verweilzeit mittels einer vorgeschalteten Vorrichtung zur Feinregelung des Betriebsdrucks, etwa mittels eines Regulierventils, zu regulieren; in diesem Fall ist der auf den Vorratsbehältern lastende Vordruck größer als der Betriebsdruck im Reaktor. Die Verweilzeit des Reaktionsgemischs in den beiden Reaktorteilen hängt selbstverständlich auch von der Dimensionierung derselben ab; beispielsweise kann die Verweilzeit im behälterförmigen Reaktor durch Niveauabsenkung des Auslasses oder durch Einbringung von Verdrängungskörpern in den Reaktor reduziert werden.

Die Dosiermenge an Acrolein enthaltendem Reaktionsgemisch, wie es aus dem Reaktor austritt und in das zu dotierende strömende Gewässer eingeleitet wird, richtet sich nach der Strömungsmenge (m³/h) und dem Grad der Verkrautung und Veralgung sowie deren Nachbildungsgeschwindigkeit. In der Praxis wird sowohl über einen Zeitraum von beispielsweise 24 Stunden kontinuierlich mit niedriger Dosis oder nur einige Stunden pro Tag mit entsprechend höherer Dosis dosiert. Im allgemeinen liegt die Acroleindosis im dotierten Wasser im Bereich zwischen 0,1 und 20 ppm (parts per million, hier ml/m³). Bei 24-stündiger Dosierung wird meist eine Acroleindosis von 0,1 bis 1 ppm, bei beispielsweise dreistündiger Dosierung dagegen eine solche von 1 bis 20 ppm, insbesondere 2 bis 10 ppm angewendet. Aus der gewünschten Acroleindosis wird die erforderliche Menge an einzusetzendem Acroleinacetal errechnet: Da die Acroleinausbeute praktisch quantitativ ist, entspricht 1 Mol Acrolein einem Mol Acroleinacetal.

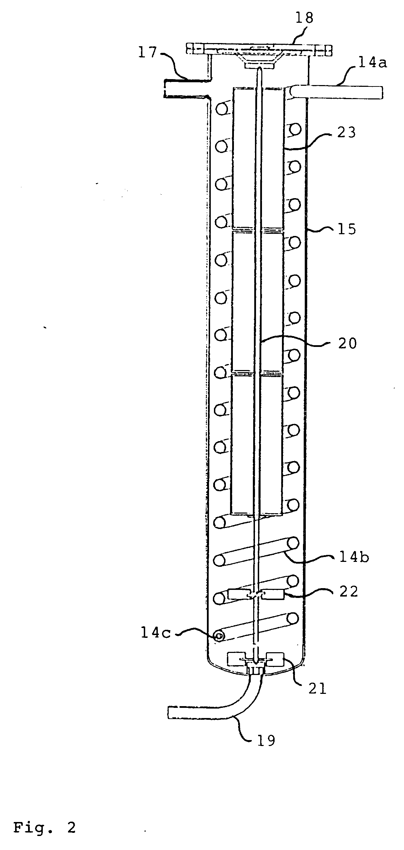

Das erfindungsgemäße Verfahren läßt sich in einfacher Weise unter Verwendung der nachfolgend anhand der Figuren 1 und 2 beschriebenen Vorrichtung durchführen. Die gesamte Vorrichtung ist auf einem Lastwagen transportierbar und benötigt keine elektrische Energie zum Betreiben.

Figur 1 zeigt ein Blockschema einer bevorzugten Ausführungsform der gesamten Vorrichtung zum Dotieren strömender Gewässer. In Figur 2 wird ein Längsschnitt einer bevorzugten Ausführungsform eines Deacetalisierungsreaktors dargestellt, wobei sich der rohrförmige Reaktorteil im behälterförmigen Reaktorteil befindet.

Die Vorrichtung gemäß Figur 1 umfaßt im wesentlichen je einen druckfesten Vorratsbehälter für die Acroleinacetallösung (1) und die wäßrige Mineralsäurelösung (2), eine Druckgasflasche (3) mit einer Vorrichtung zur Druckregulierung (4), Druckleitungen (5) und (6) zu den Vorratsbehältern (1) und (2), Produktleitungen (7) und (8) aus den Behältern (1) und (2) zur Mischkammer (11), wobei in jeder Produktleitung eine Dosiervorrichtung (9) bzw. (10) angeordnet ist, eine Leitung (12) von der Mischkammer zum Reaktor für das Reaktionsgemisch, eine Vorrichtung zur Feinregulierung des Durchflusses (13), einen Deacetalisierungsreaktor, bestehend aus einem rohrförmigen (14) und einem behälterförmigen (15) Teil mit einem Übergang (16) zwischen den Reaktorteilen und einer Ausgangsleitung (17) aus dem behälterförmigen Reaktor, sowie eine Leitung (17a) in das zu dotierende Gewässer.

Die Druckregulierungsvorrichtung (4) für die Druckgasflasche (3) schließt Vorrichtungen zum Öffnen und Schließen der Druckgasflasche sowie zum Ablesen des Flaschendrucks sowie des eingestellten Betriebs-Vordrucks ein.

Bei den Dosiervorrichtungen (9) und (10) handelt es sich um übliche Vorrichtungen zur Einstellung eines bestimmten Durchflusses. Beispielsweise kann es sich jeweils um ein Dosierventil in Verbindung mit einem Rotameter handeln. Vorzugsweise wird aber als Dosiervorrichtung (9) bzw. (10) eine Kombination aus einer Lochblende mit einem Rückschlagventil verwendet, wobei die zu verwendende Lochblende dem geforderten Durchfluß angepaßt wird; durch die Auswahl des Lochdurchmessers in der Lochblende in (9) einerseits und in (10) andererseits kann das Mischungsverhältnis der Acroleinacetallösung zur wäßrigen Mineralsäurelösung auf einen konstanten, zuvor als optimal ermittelten Wert eingestellt werden.

Bei der Mischkammer (11) handelt es sich um den Ort der Zusammenführung und ersten Durchmischung der Produktströme aus den Leitungen (7) und (8). Die Leitungen (7) und (8) werden zweckmäßigerweise derart zusammengeführt, daß eine möglichst gute Durchmischung der Lösungen ermöglicht wird. Als Mischkammer eignet sich meist bereits eine einfache Zusammenführung der Leitungen (7) und (8), jedoch können auch statisch wirkende Mischeinbauten zugegen sein. Die Mischkammer kann auch in den rohrförmigen Reaktorteil integriert sein.

Sofern der Durchfluß durch den Reaktor nicht mittels der Druckregulierungsvorrichtung (4) und den Dosiervorrichtungen (9) und (10) fest eingestellt wird, kann dieser mittels einer Feinregulierungsvorrichtung (13), üblicherweise ausgebildet als Dosierventil in Verbindung mit einer Druckmeßvorrichtung nach dem Ventil, auf den aktuellen Bedarf einreguliert werden. Um in der Praxis den Durchfluß ohne Durchflußmeßgeräte zu ermitteln, kann dieser bei durch Lochblenden (in (9) und (10)) festgelegtem Mischungsverhältnis der Lösungen aus den Vorratsbehältern (1) und (2) aus einer zuvor erstellten Eichkurve, in welcher der Betriebsdruck gegen den Durchfluß an Reaktionsgemisch beziehungsweise Acroleinacetallösung und dem entsprechenden Acrolein aufgetragen ist, abgelesen werden.

Das Reaktionsgemisch durchströmt zunächst einen rohrförmigen (14) und dann einen behälterförmigen (15) Reaktor. Der Übergang (16) kann eine beliebige Rohrverbindung sein oder in Ausführungsformen gemäß Figur 2 auch entfallen. Der rohrförmige Reaktorteil (14) kann beispielsweise in Form einer Füllkörperkolonne oder, meist bevorzugt, in Form eines mäanderförmig oder wendelförmig angeordneten Rohres ausgebildet sein. Als Füllkörper einer Füllkörperkolonne eignen sich inerte Mineralien, wie sie auch in Destillationskolonnen Verwendung finden. Im rohrförmigen Reaktorteil beginnt die Deacetalisierung, wobei am Ende dieses Reaktorteils das Gemisch weitgehend homogen ist, so daß es sich im behälterförmigen Reaktorteil (15) auch bei langsamer Strömung nicht mehr entmischt und die Deacetalisierung vervollständigt werden kann. Die Form des behälterförmigen Reaktorteils (15) ist beliebig; der Einlaß des Reaktionsgemischs befindet sich meist im unteren Teil, der Auslaß (17) zum zu dotierenden Gewässer meist im oberen Teil des behälterförmigen Reaktorteils (15).

Die räumliche Anordnung der beiden Reaktorteile ist an sich beliebig - nebeneinander, übereinander oder ineinander. Eine besonders vorteilhafte und kompakte Ausführungsform zeigt Figur 2: Der rohrförmige Reaktorteil (14) befindet sich im Inneren des behälterförmigen Reaktors (15). Das Reaktionsgemisch tritt am Eingang (14a) des Reaktors in eine Rohrwendel (14b) ein und verläßt diese durch eine Düse (14c). Die Rohrwendel ist vorzugsweise senkrecht angeordnet, und das Reaktionsgemisch fließt von oben nach unten. Durch die Düse am Ende der Wendel wird eine tangentiale Strömung erzielt und damit eine Durchmischung des neu in den behälterförmigen Reaktorteil eintretenden Gemischs mit dem dort befindlichen Reaktionsgemisch bewirkt. Das Volumen des rohrförmigen Reaktors ist im allgemeinen wesentlich kleiner als dasjenige des behälterförmigen Reaktors. Das deacetalisierte Reaktionsgemisch verläßt den Reaktor (15) durch die Ausgangsleitung (17), welche mit einer in das zu dotierende Gewässer führenden, nicht gezeigten Leitung verbunden ist.

In der Ausführungsform gemäß Fig. 2 ist die Düse zusätzlich derart angeordnet, daß der aus der Rohrwendel austretende Strom ein dort an einer Achse (20) installiertes Turbinenrad (21) antreibt; an der Achse angeordnete Rührpaddel ermöglichen eine weiter Durchmischung. Durch den Reaktordeckel (18) lassen sich bei Bedarf Verdrängungskörper (23) in den Behälter (15) einbringen, um dessen Volumen zu mindern und damit die Verweilzeit zu verkürzen. Der Reaktorablaß (19), der mit einem in Fig. 2 nicht gezeigten Ventil ausgestattet ist, dient der Entleerung des Reaktors. Bei den Gegenständen gemäß den Bezugsziffern (20) bis (22) sowie (23) handelt es sich um fakultative Einrichtungen, welche nur in seltenen Anwendungsfällen erforderlich sind.

Die Vorteile der erfindungsgemäßen Vorrichtung bestehen in ihrem einfachen Aufbau und in deren einfachen Handhabung. Die Vorrichtung erfordert keine aufwendige Steuerung; sie läßt sich problemlos auf- und abbauen sowie transportieren, so daß sie an ständig wechselnden Einsatzorten betrieben werden kann.

### Beispiel

Unter Verwendung einer Vorrichtung gemäß Figur 1 mit einem Reaktor gemäß Fig. 2 wird ein Bewässerungskanal mit einem Fluß von 10.200 m³/h und mittelstarkem Algen- und Pflanzenbewuchs mit aus 2-Vinyl-1,3-dioxolan (VDL) erzeugtem Acrolein als Biozid behandelt.

Erforderliche Acroleindosis 3,1 ml/m³;
Dosierdauer 3 Stunden.

Die eingesetzte Acroleinacetallösung besteht aus 80 Vol-% VDL und 20 Vol-% Isopropanol (= 83,6 / 16,4 Gew.-%). Zur Deacetalisierung wird eine 10 gew.-%ige wäßrige Schwefelsäurelösung verwendet. Die Lochblenden in den Dosiervorrichtungen (9) und (10) werden so gewählt, daß das Mischungsverhältnis Acetallösung zu Mineralsäurelösung 1 zu 0,36 beträgt. Die Düse (14c) hat einen Durchmesser von 1,5 mm. Bei der geforderten Acroleindosierung wird der Durchfluß mittels der Reguliervorrichtung (13) derart eingestellt, daß pro Stunde 80 l Reaktionsgemisch den Reaktor verlassen (entsprechend 58,8 l/h VDL-Lösung und 21,2 l/h Schwefelsäurelösung). Der Vordruck aus der Druckgasflasche beträgt 3 bar; aus einer Eichkurve wurden als Betriebsdruck für den geforderten Durchfluß 1,034 bar abgelesen und mittels der Dosiervorrichtung (13) eingestellt.

### Bezugszeichenliste zu den Figuren 1 und 2

- 1: Druckfester Vorratsbehälter
(für Acroleinacetallösung)
- 2: Druckfester Vorratsbehälter
(für wäßrige Mineralsäurelösung)
- 3: Druckgasflasche
- 4: Druckregulierungsvorrichtung
- 5: Druckleitung zu Vorratsbehälter 1
- 6: Druckleitung zu Vorratsbehälter 2
- 7: Produktleitung aus Vorratsbehälter 1
- 8: Produktleitung aus Vorratsbehälter 2
- 9: Dosiervorrichtung in Leitung 7
- 10: Dosiervorrichtung in Leitung 8
- 11: Mischkammer
- 12: Leitung für Reaktionsgemisch von 11 zum Reaktor
- 13: Vorrichtung zur Durchflußregulierung
- 14: rohrförmiger Reaktor
- 14a: Eingang zu 14
- 14b: Rohrwendel
- 14c: Düse
- 15: behälterförmiger Reaktor
- 16: Übergang zwischen 14 und 15
- 17: Ausgangsleitung aus 15
- 17a: Leitung in das zu dotierende Gewässer
- 18: Reaktordeckel von 15
- 19: Reaktorablaß aus 15
- 20: Turbinenachse
- 21: Turbinenflügel
- 22: Paddelmischer
- 23: Verdrängungskörper

## Patentansprüche

1. Verfahren zur Dotierung strömener Gewässer mit Acrolein, wobei Acrolein außerhalb des Gewässers durch Deacetalisierung eines Acetals von Acrolein mit einem Alkohol mit 1 bis 4 C-Atomen und 1 bis 3 Hydroxylgruppen in wäßriger Phase in Gegenwart einer Mineralsäure gebildet wird,
dadurch gekennzeichnet,
daß man
eine 25 bis 95 gew.-%ige Lösung des Acroleinacetals in einem Lösungsmittel und
eine 3 bis 30 gew.-%ige wäßrige Mineralsäurelösung
aus druckfesten Vorratsbehältern durch Anlegen eines Drucks aus einer Druckgasflasche
in eine Mischkammer drückt,
wobei das Mischungsverhältnis mittels Dosiervorrichtungen in den Zufuhrleitungen so eingestellt wird, daß das Reaktionsgemisch pro Mol Acroleinacetal mindestens 1 Mol Wasser und zwischen 0,01 und 0,1 Mol Mineralsäure enthält,
das in der Mischzone erhaltene Reaktionsgemisch zunächst durch einen rohrförmigen und anschließend durch einen behälterförmigen Teil eines Deacetalisierungsreaktors leitet,
wobei die mittlere Verweilzeit im rohrförmigen Reaktor mindestens 10 Sekunden und im behälterförmigen Reaktor mindestens 2 Minuten beträgt,
und das aus dem behälterförmigen Reaktor austretende Reaktionsgemisch in das zu dotierende strömende Gewässer einleitet.

2. Verfahren nach Anspruch 1,
dadurch gekennzeichnet,
daß man als Acroleinacetal 2-Vinyl-1,3-dioxolan und als Lösungsmittel für das Acroleinacetal einen einwertigen Alkohol mit 1 bis 4 C-Atomen verwendet und die Lösung 50 bis 90 Gew.-% Acroleinacetal enthält.

3. Verfahren nach Anspruch 1 oder 2,
dadurch gekennzeichnet,
daß man eine 80 bis 90 gew.-%ige Lösung des Acroleinacetals in Isopropanol verwendet.

4. Verfahren nach einem oder mehreren der Ansprüche 1 bis 3,
dadurch gekennzeichnet,
daß man als Mineralsäure Schwefelsäure verwendet und diese in Form einer 5 bis 20 gew.-%igen wäßrigen Lösung einsetzt.

5. Verfahren nach einem oder mehreren der Ansprüche 1 bis 5,
dadurch gekennzeichnet,
daß im Reaktionsgemisch pro Mol 2-Vinyl-1,3-dioxolan, 3 bis 7 Mol-% Schwefelsäure und 2 bis 2,5 Mol Wasser enthalten sind.

6. Verfahren nach einem oder mehreren der Ansprüche 1 bis 6,
dadurch gekennzeichnet,
daß man das Verfahren unter Verwendung einer Vorrichtung gemäß einem der Vorrichtungsansprüche durchführt.

7. Vorrichtung zur Dotierung strömender Gewässer mit Acrolein, wobei Acrolein außerhalb des Gewässers durch Deacetalisierung eines Acroleinacetals in wäßriger Phase in Gegenwart einer Mineralsäure gebildet wird, umfassend einen Deacetalisierungsreaktor (14) und (15), je einen Vorratsbehälter für eine Acroleinacetal enthaltende Lösung (1) und eine wäßrige Mineralsäurelösung (2),
dadurch gekennzeichnet,
daß
die Vorratsbehälter (1) und (2) druckfest ausgebildet und zwecks Druckaufbau mit einer Druckgasflasche (3) mit Druckregelvorrichtung (4) verbunden sind,
die Produktleitungen (7) und (8), welche jeweils eine Dosiervorrichtung (9) bzw. (10) aufweisen,
aus den Vorratsbehältern in eine Mischkammer (11) führen, wobei sich die Mischkammer vor oder im Eingangsbereich des Deacetalisierungsreaktors befindet,
der Deacetalisierungsreaktor einen rohrförmigen ersten (14) und einen behälterförmigen zweiten (15) Reaktorteil umfaßt und
der Ausgang des Deacetalisierungreaktors (17) mit einer unter die Oberfläche des zu dotierenden Gewässers führenden Leitung (17a) verbunden ist.

8. Vorrichtung nach Anspruch 7,
dadurch gekennzeichnet,
daß die Produktleitungen als Dosiervorrichtung eine Lochplatte und ein Rückschlagventil aufweisen.

9. Vorrichtung nach Anspruch 7 oder 8,
dadurch gekennzeichnet,
daß die Produktleitungen in eine vor dem Deacetalisierungsreaktor angeordnete Mischkammer münden und die Leitung zwischen der Mischkammer und dem Deacetalisierungsreaktor mit einer Vorrichtung zur Feinregulierung des Arbeitsdrucks ausgestattet ist.

10. Vorrichtung nach einem oder mehreren der Ansprüche 7 bis 9,
dadurch gekennzeichnet,
daß der rohrförmige Teil des Deacetalisierungsreaktors als Rohrwendel mit einer an deren Ende angeordneten Düse ausgebildet ist.

11. Vorrichtung nach Anspruch 10,
dadurch gekennzeichnet,
daß die Rohrwendel im behälterförmigen Teil des Deacetalisierungsreaktors angeordnet ist, wobei sich vorzugsweise die Düse im unteren Bereich des behälterförmigen Reaktors und dessen Auslaß im oberen Bereich befinden.

## Claims

1. A method for doping stretches of flowing water with acrolein, wherein acrolein is formed outside the stretch of water by deacetalation of an acrolein acetal having an alcohol containing from 1 to 4 C atoms and from 1 to 3 hydroxyl groups in aqueous phase in the presence of a mineral acid,
characterised in that
a 25 to 95% by weight solution of the acrolein acetal in a solvent and
a 3 to 30% by weight aqueous mineral acid solution
are compressed into a mixing chamber
from compression-proof storage tanks, by application of a pressure from a pressure cylinder
wherein the ratio of mixture into the inlet pipes is adjusted by means of metering devices so that the reaction mixture contains at least 1 mole of water and between 0.01 and 0.1 moles of mineral acid per mole of acrolein acetal,
the reaction mixture contained in the mixing zone is led firstly through a tubular and then through a container-shaped section of a deacetalation reactor,
wherein the average residence time in the tubular reactor is at least 10 seconds and in the container-shaped reactor is at least 2 minutes,
and the reaction mixture emerging from the container-shaped reactor passes into the stretch of flowing water which is to be doped.

2. Method according to claim 1,
characterised in that
2-vinyl-1,3-dioxolane is used as the acrolein acetal and a monovalent alcohol having 1 to 4 C atoms is used as solvent for the acrolein acetal and the solution contains from 50 to 90% by weight of acrolein acetal.

3. Method according to claim 1 or 2,
characterised in that
an 80 to 90% by weight solution of the acrolein acetal in isopropanol is used.

4. Method according to one or more of claims 1 to 3,
characterised in that
the mineral acid used is sulphuric acid, the latter being used in the form of a 5 to 20% by weight aqueous solution.

5. Method according to one or more of claims 1 to 4,
characterised in that
from 3 to 7 mol-% of sulphuric acid and from 2 to 2.5 moles of water per mole of 2-vinyl-1,3-dioxolane are contained in the reaction mixture.

6. Method according to one or more of claims 1 to 5,
characterised in that
the method is performed using a device according to one of the device claims.

7. A device for doping stretches of flowing water with acrolein, wherein acrolein is formed outside the stretch of water by deacetalation of an acrolein acetal in aqueous phase in the presence of a mineral acid, comprising a deacetalation reactor (14) and (15), one storage tank respectively for a solution containing acrolein acetal (1) and an aqueous mineral acid solution (2),
characterised in that
the storage tanks (1) and (2) are of compression-proof construction and are connected to a pressure cylinder (3) equipped with a pressure-controlling device (4) for the purpose of building up pressure,
the product pipes (7) and (8), which each have a metering device (9) and (10) respectively, lead out of the storage tanks into a mixing chamber (11), wherein the mixing chamber is situated in front of or in the inlet area of the deacetalation reactor,
the deacetalation reactor comprises a first tubular reactor part (14) and a second container-shaped reactor part (15) and
the outlet of the deacetalation reactor (17) is connected to a pipe (17a) leading to a point beneath the surface of the stretch of water to be doped.

8. Device according to claim 7,
characterised in that
the product pipes have as a metering device an apertured plate and a check valve.

9. Device according to claim 7 or 8,
characterised in that
the product pipes run into a mixing chamber arranged in front of the deacetalation reactor and the pipe between the mixing chamber and the deacetalation reactor is equipped with a device for fine adjustment of the operating pressure.

10. Device according to one or more of claims 7 to 9,
characterised in that
the tubular part of the deacetalation reactor is constructed in the form of a coiled tubing having a nozzle arranged at the end thereof.

11. Device according to claim 10,
characterised in that
the coiled tubing is arranged inside the container-shaped part of the deacetalation reactor, wherein the nozzle is positioned preferably in the lower part of the container-shaped reactor and the outlet of the latter is positioned in the upper part.

## Revendications

1. Procédé de dopage d'eaux courantes avec de l'acroléine, où l'acroléine est formée en dehors de l'eau par désacétalisation d'un acétal d'acroléine et d'un alcool de 1 à 4 atomes de C et 1 à 3 groupes hydroxyles dans la phase aqueuse en présence d'un acide minéral
caractérisé en ce qu'
on pousse sous pression dans une chambre de mélange,
- une solution de 25 à 95 % en poids d'acétal d'acroléine dans un solvant et
- une solution aqueuse d'acide minéral de 3 à 30 % en poids à partir de réservoirs sous pression par application de la pression d'une bouteille de gaz sous pression, où on règle le rapport de mélange au moyen de dispositifs de dosage dans les conduites d'introduction de sorte que le mélange réactionnel représente par mole d'acétal d'acroléine au moins 1 mole d'eau et contient entre 0,01 et 0,1 mole d'acide minéral, le mélange réactionnel obtenu dans la zone de mélange passe d'abord dans une partie de réacteur tubulaire et ensuite dans une partie de réacteur en forme de cuve d'un réacteur de désacétalisation, où le temps moyen de séjour dans le réacteur tubulaire est au moins 10 secondes et dans le réacteur en forme de cuve au moins 2 minutes et le mélange réactionnel sortant du réacteur débouche dans les eaux courantes à doper.

2. Procédé selon la revendication 1,
caractérisé en ce qu'
on utilise comme acétal d'acroléine le 2-vinyl-1,3-dioxolane et comme solvant de l'acétal d'acroléine un monoalcool de 1 à 4 atomes de C et la solution contient 50 à 90 % en poids d'acétal d'acroléine.

3. Procédé selon la revendication 1 ou 2,
caractérisé en ce qu'
on utilise une solution de 80 à 90 % en poids de l'acétal d'acroléine dans l'isopropanol.

4. Procédé selon l'une ou plusieurs des revendications 1 à 3,
caractérisé en ce qu'
on utilise l'acide sulfurique comme acide minéral et qu'on le met en oeuvre sous forme d'une solution aqueuse de 5 à 20 % en poids.

5. Procédé selon l'une ou plusieurs des revendications 1 à 4,
caractérisé en ce que
dans le mélange réactionnel se trouve par mole de 2-vinyl-1,3-dioxolane, 3 à 7 % molaires d'acide sulfurique et 2 à 2,5 moles d'eau.

6. Procédé selon l'une ou plusieurs des revendications 1 à 5,
caractérisé en ce qu'
on réalise le procédé en utilisant un dispositif selon l'une des revendications du dispositif.

7. Dispositif de dopage d'eaux courantes avec de l'acroléine, où on forme l'acroléine en dehors de l'eau par désacétilation d'un acétal d'acroléine dans une phase aqueuse en présence d'un acide minéral, comprenant un réacteur de désacétalisation (14) et (15), respectivement un réservoir de solution (1) contenant l'acétal d'acroléine et une solution aqueuse d'acide minéral (2),
caractérisé en ce que
les réservoirs (1) et (2) sont conçus pour résister à la pression et sont reliés à une bouteille de gaz sous pression (3) pour réaliser la mise en pression par l'intermédiaire d'un dispositif de régulation de pression (4), les conduites de produit (7) et (8) qui présentent respectivement un dispositif de dosage (9) et (10), conduisent des réservoirs dans une chambre de mélange (11), où la chambre de mélange se trouve en amont ou dans le domaine d'entrée du réacteur de désacétalisation, le réacteur de désacétalisation comprend une première partie de réacteur tubulaire (14) et une deuxième partie de réacteur (15) en forme de cuve et la sortie du réacteur de désacétalisation (17) est reliée à une conduite (17a) conduisant sous la surface de l'eau à doper.

8. Dispositif selon la revendication 7,
caractérisé en ce que
les conduites de produit présentent comme dispositif de dosage une plaque perforée et un clapet de non-retour.

9. Dispositif selon la revendication 7 ou 8,
caractérisé en ce que
les conduites de produits débouchent dans une chambre de mélange placée avant le réacteur de désacétalisation et que la conduite comprise entre la chambre de mélange et le réacteur de désacétalisation est équipée d'un dispositif de réglage fin de la pression de travail.

10. Dispositif selon l'une ou plusieurs des revendications 7 à 9,
caractérisé en ce que
la partie tubulaire du réacteur de désacétalisation est en forme de serpentin tubulaire avec une buse placée à son extrémité.

11. Dispositif selon la revendication 10,
caractérisé en ce que
le serpentin tubulaire est implanté dans la partie en forme de cuve du réacteur de désacétalisation, où de préférence la buse se trouve dans la partie inférieure du réacteur en forme de cuve et sa sortie se trouve dans le domaine supérieur.
